# EUROPEAN PATENT SPECIFICATION

(11) **EP 4 439 856 B1**
(45) Date of publication and mention of the grant of the patent: **07.10.2026**
(21) Application number: 24190539.7
(22) Date of filing: 07.08.2023
(51) Int. Cl.: A62C 3/16, H01M 10/658, H01M 50/204, H01M 50/222, H01M 50/231, H01M 50/233, H01M 50/609, H01M 50/673

(54) **ENERGY STORAGE APPARATUS AND FIRE EXTINGUISHING METHOD THEREOF**
ENERGIESPEICHERVORRICHTUNG UND FEUERLÖSCHVERFAHREN DAFÜR
APPAREIL DE STOCKAGE D'ÉNERGIE ET SON PROCÉDÉ D'EXTINCTION D'INCENDIE

(30) Priority: 10.08.2022 TW 111130061
(43) Date of publication of application: 02.10.2024
(62) Document number(s) of the earlier application(s) in accordance with Art. 76 EPC: 23190057.2 / 4 321 225
(73) Proprietor: TCC Energy Storage Technology Corporation, Taipei City 104414 (TW)
(72) Inventor: CHANG, An-Ping, 104414 TAIPEI CITY (TW)
(74) Representative: 2K Patent Partnerschaft mbB

(56) References cited:
- CN-A- 114 024 060
- DE-A1- 102017 210 615
- DE-U1- 202021 106 777
- US-B2- 9 903 491

## Description

### BACKGROUND

### 1. Technical Field

The present disclosure substantially relates to an energy storage apparatus and a fire extinguishing method thereof, and more particularly, the present disclosure relates to an energy storage apparatus including a fire extinguishing system and a fire extinguishing method thereof.

### 2. Description of the Related Art

In order to improve the efficiency and flexibility of energy use, energy storage development has become a trend in recent years. With the developments in battery technology (such as lithium batteries), battery energy storage apparatuses have become one of the mainstream energy storage apparatuses.

However, in the process of battery storage and transportation, various factors (such as overcharging, impact, electrical control system errors, and defects in the operating environment or process) can damage separators in the batteries, such that the positive electrode and the negative electrode can contact and generate a short circuit, resulting in a high-temperature chemical reaction that can ignite the combustible organic components in the batteries. The high temperature resulted from the thermal runaway of batteries may further damage the apparatus adjacent to the battery energy storage apparatuses and increase occurrence of fire accidents.

DE 20 2021 106 777 U1 discloses an energy storage apparatus according to the preamble of claim 1, more specifically a protection device for an energy store comprising a lockable container with a slot for the energy storage device, a connecting duct leading into the receptacle with a connecting piece, and an exhaust air socket connected to the receptacle. A pressure relief buffer mechanism comprising a sealing buffer member configured to deform or rupture when a pressure in the accommodating space is greater than a threshold, such that a gas or a liquid in the accommodating space is discharged out of the energy storage cabinet through the deformed or ruptured sealing buffer member is not disclosed.

US 9 903 491 B2 discloses the general principles of venting explosion pressure from a closed space in a controlled manner, in particular for cast frames or bodies, wherein a wall section that is thinner than load bearing walls is placed in a suitable location. A specific solution for devices similar to cabinets is not disclosed.

### SUMMARY

It is an object of the present invention to provide an enhanced energy storage apparatus including an energy storage cabinet and a fire extinguishing system configured for fire extinguishing in a more efficient manner. It is a further object of the present invention to provide a corresponding pressure relief method for use in such an energy storage apparatus.

This problem is solved by an energy storage apparatus as claimed in claim 1 and by a pressure relief method as claimed in claim 11. Further advantageous embodiments are the subject-matter of the dependent claims.

### BRIEF DESCRIPTION OF THE DRAWINGS

When the present disclosure is read with reference to the accompanying drawings, aspects of the present disclosure can be better understood according to the following implementations. It should be noted that various features may not be drawn to scale and that the dimensions of the various features may be arbitrarily scaled up or down to clearly depict the content of the present disclosure.
FIG. 1A is a schematic diagram of an energy storage apparatus according to some embodiments of the present disclosure;
FIG. 1B is a flowchart of a fire extinguishing method of an energy storage apparatus according to some embodiments of the present disclosure;
FIG. 2 is a perspective view of an energy storage apparatus according to some embodiments of the present disclosure;
FIG. 3A is a partial schematic diagram of a cabinet body of an energy storage apparatus according to some embodiments of the present disclosure;
FIG. 3B is a partial exploded view of a door of a cabinet body of an energy storage apparatus according to some embodiments of the present disclosure;
FIG. 4 is a three-dimensional view of a cabinet body of an energy storage apparatus according to some embodiments of the present disclosure; and
FIG. 5 is a schematic diagram of an energy storage apparatus according to some embodiments of the present disclosure.

In the drawings and implementations of the present disclosure, the same or similar components are denoted by the same reference numerals.

### DETAILED DESCRIPTION

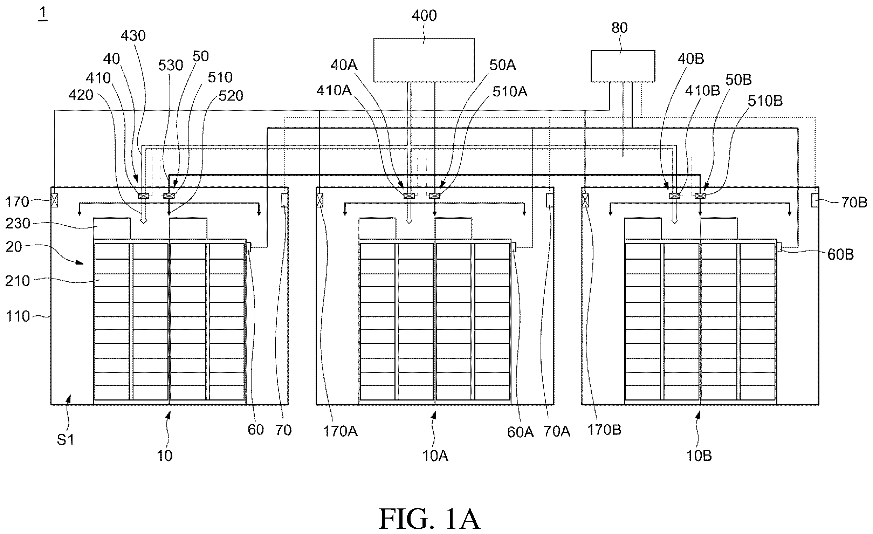

FIG. 1A is a schematic diagram of an energy storage apparatus 1 according to some embodiments of the present disclosure.

Referring to FIG. 1A, the energy storage apparatus 1 may include one or more energy storage cabinets (for example, energy storage cabinets 10, 10A, and 10B), one or more battery systems 20, a fire extinguishing system, and a control system 80. It should be noted that the content of the present disclosure is described below by using an example in which the energy storage apparatus includes three energy storage cabinets 10, 10A, and 10B, but a quantity of energy storage cabinets that the energy storage apparatus 1 of the present disclosure can include is not limited thereto and may be adjusted according to an actual application.

In some embodiments, the energy storage cabinets 10, 10A, and 10B may each include a cabinet body 110. Each cabinet body 110 may include an accommodating space S1 for accommodating at least one battery system 20. In some embodiments, the energy storage cabinets 10, 10A, and 10B may respectively further include pressure relief valves 170, 170A, and 170B. In some embodiments, the pressure relief valves 170, 170A, and 170B are each configured to be opened when the pressure in the accommodating space S1 is greater than a threshold. In some embodiments, the threshold is less than the compressive strength of the cabinet body 110. According to some embodiments of the present disclosure, the pressure relief valve may be opened to release the pressure (for example, the pressure generated by gas in the accommodating space S1) in the accommodating space S1 out of the cabinet body 110. In some embodiments, the pressure relief valves 170, 170A, and 170B are located at the top of the cabinet body 110. In some embodiments, the pressure relief valve 170, 170A, and 170B are located above the battery system 20.

In some embodiments, the battery system 20 of each energy storage cabinet may include a plurality of battery packs 210, a battery management system (BMS) 230, and an integrated energy management system (EMS). The battery management system 230 is located above the battery packs 210 and is electrically connected to a plurality of corresponding battery packs 210 that are connected in series. In some embodiments, each battery pack 210 includes a temperature sensor configured to detect a temperature of the battery pack 210. In some embodiments, the battery management system 230 is configured to reduce or cut off, according to a temperature signal of each battery pack 210 received by the battery management system 230, an output current or an input current of the corresponding battery pack 210. In some embodiments, the battery management system 230 is configured to reduce or cut off, when the temperature of each battery pack 210 exceeds a threshold (for example, about 50°C or 55°C), an output current or an input current of the corresponding battery pack 210. Reducing or cutting off the output current or the input current of the corresponding battery pack 210 can lower the temperature of the battery pack 210, to further reduce the risk of fire or extinguish fire. In some embodiments, the energy management system (EMS) is configured to transfer energy of one or more batteries in a battery system 20 in a specific energy storage cabinet to a battery system 20 of another energy storage cabinet. Through the design of the integrated energy management system, energy in a battery system 20 in an energy storage cabinet that is at risk of fire or has caught fire may be transferred to a battery system 20 of another energy storage cabinet, so that the risk of fire may be reduced, or the fire may be extinguished. In some embodiments, the pressure relief valves 170, 170A, and 170B are respectively located above corresponding battery packs 210.

In some embodiments, the fire extinguishing system may include a liquid injection device (for example, liquid injection devices 40, 40A, and 40B). In some embodiments, the liquid injection device is configured to inject liquid into an accommodating space S1 of a cabinet body 110 of an energy storage cabinet corresponding to the liquid injection device to flood a battery system 20 in the accommodating space S1 for fire extinguishing. In some embodiments, the liquid injected by the liquid injection device 40 may include an aqueous solution, an electrolyte (for example, sodium sulfate (Na₂SO₄), sodium chloride (NaCl), sodium hydroxide (NaOH), or the like), or other liquid that can be used for fire extinguishing, or any combination thereof. In some embodiments, the liquid injection device is configured to be started in response to at least one fire signal. In some embodiments, the liquid injection device is configured to be started in response to at least one fire signal of the energy storage cabinet corresponding to the liquid injection device. In some embodiments, the liquid injection device 40 is configured to be started in response to at least one fire signal of the energy storage cabinet 10. In some embodiments, the liquid injection device 40 is configured to inject liquid into the accommodating space S1 of the cabinet body 110 of the energy storage cabinet 10 to flood the battery system 20 for fire extinguishing. In some embodiments, the liquid injection device 40A is configured to be started in response to at least one fire signal of the energy storage cabinet 10A. In some embodiments, the liquid injection device 40A is configured to inject liquid into accommodating space S1 of the cabinet body 110 of the energy storage cabinet 10A to flood the battery system 20 for fire extinguishing. In some embodiments, the liquid injection device 40B is configured to be started in response to at least one fire signal of the energy storage cabinet 10B. In some embodiments, the liquid injection device 40B is configured to inject liquid into the accommodating space S1 of the cabinet body 110 of the energy storage cabinet 10B to flood the battery system 20 for fire extinguishing. Once the battery system 20 catches fire, since the temperature of the battery is high enough, the battery can continue burning without oxygen until the energy is exhausted, and thus the conventional fire extinguishing method of isolating oxygen cannot effectively extinguish fire of the battery system 20. According to some embodiments of the present disclosure, injecting liquid to flood the battery system 20 can lower the temperature of the battery packs 210 of the battery system 20, to further extinguish fire. Further, the integrated energy management system may further transfer energy of other battery system(s) 20 in the energy storage cabinet in which the battery system 20 that has caught fire is located into a battery system of another energy storage cabinet, which may further accelerate fire extinguishing.

In some embodiments, the liquid injection device 40 is configured to flood the battery system 20 in the energy storage cabinet 10 before the battery system 20 is completely burnt. In some embodiments, the liquid injection device 40 is configured to flood the battery system 20 before the fire spreads. In some embodiments, the liquid injection device 40 is configured to be started in response to at least one fire signal of the energy storage cabinet 10 and flood the battery system 20 in the energy storage cabinet 10 before the fire spreads. In some embodiments, the liquid injection device 40 is configured to flood the battery system 20 within an injection time of less than about 10 minutes (for example, an injection time of about 10 minutes, 9 minutes, 7 minutes, 5 minutes, 3 minutes, 2.5 minutes, or 2 minutes, or another injection time ranging from 2 to 10 minutes).

In some embodiments, the liquid injection device 40 includes a solenoid valve 410, an outlet 420 and a pipeline 430. In some embodiments, liquid provided by a liquid supply system 400 is supplied to the liquid injection device 40 through the pipeline 430. The solenoid valve 410 opens when the liquid injection device 40 receives a fire signal, so that the liquid provided from the liquid supply system 400 is injected into the accommodating space S1 of the cabinet body 110 of the energy storage cabinet 10 through the outlet 420 to flood the battery system 20 for fire extinguishing. In some embodiments, the outlet 420 may be located above the battery packs 210. In some other embodiments, the outlet 420 may be located at the bottom of the cabinet body 110. The outlet 420 of the present disclosure is not limited to being arranged at a specific position provided that the outlet 420 can be used for injecting liquid to flood the battery system 20 for fire extinguishing. In some embodiments, the liquid injection device 40 may include one or more solenoid valves 410, one or more outlets 420, and one or more pipelines 430.

In some embodiments, the liquid injection devices 40, 40A, and 40B respectively include solenoid valves 410, 410A, and 410B, and may be started respectively in response to fire signals of the respective energy storage cabinets 10, 10A, and 10B, to inject, through the corresponding outlets 420, liquid provided by the liquid supply system 400 into the accommodating spaces S1 of the cabinet bodies 110 of the corresponding energy storage cabinets 10, 10A, and 10B, to flood the battery systems 20 for fire extinguishing. In some embodiments, the liquid supply system 400 may include a liquid storage tank, a fire water supply system (for example, a fire water tank), or a combination thereof. In some embodiments, the pipelines 430 of the liquid injection devices 40, 40A, and 40B are all connected to the same liquid supply system 400. In some embodiments, the pipelines 430 of the liquid injection devices 40, 40A, and 40B may be connected to different liquid supply systems. For example, the pipelines 430 of the liquid injection devices 40 and 40A may be connected to a liquid storage tank, and the pipeline 430 of the liquid injection device 40B may be connected to a fire water supply system. In some embodiments, the liquid supply system 400 may include a water storage tank and a fire liquid supply system, and the pipelines 430 of the liquid injection devices 40, 40A, and 40B are all connected to the water storage tank. The water storage tank is further connected to the fire water supply system. The fire water supply system can supply water into the water storage tank continuously, to help the water storage tank to provide water to the liquid injection devices 40, 40A, and 40B continuously.

In some embodiments, the liquid injection device 40 is configured to inject liquid into the accommodating space S1 of the cabinet body at a flow rate greater than or equal to at least about 6 liters/second (L/s). In some embodiments, the liquid injection device 40 is configured to inject liquid into the accommodating space S1 of the cabinet body 110 at a flow rate of 6 L/s or higher, 20 L/s, 35 L/s, 50 L/s, 70 L/s, or 80 L/s, or another flow rate ranging from 6 to 80 L/s. In some embodiments, the height of the cabinet body 110 is less than 3 meters (for example, a height of about 2.9 meters, 2.5 meters, or 2 meters, or another height ranging from 2 to 2.9 meters). In some embodiments, the liquid storage tank is located above the cabinet body 110. The distance between the bottom of the liquid storage tank and the bottom of the accommodating space S1 of the cabinet body 110 is about 3 meters. The diameter of the pipeline 430 is about 3 inches or 4 inches. The flow rate at which the liquid injection device 40 using a pipeline having a 3-inch diameter injects liquid is about 6.38 L/s, and the flow rate can be higher if a larger diameter is used. In some embodiments, if liquid is injected into the accommodating space S1 of the cabinet body 110 at a flow rate of about 6.38 L/s, the battery system 20 can be flooded after an injection time ranging from about 30 to 60 minutes. In some embodiments, the liquid storage tank is located above the cabinet body 110. The distance between the bottom of the liquid storage tank and the bottom of the accommodating space S1 of the cabinet body 110 is about 6 meters. The diameter of the pipeline 430 is about 3 inches or 4 inches. The flow rate at which the liquid injection device 40 injects liquid is about 35.52 L/s, and the flow rate can be higher if a larger diameter is used. In some embodiments, if liquid is injected into the accommodating space S1 of the cabinet body 110 at a flow rate of about 35.52 L/s, the battery system 20 can be flooded after an injection time of about 30 minutes. In some embodiments, the liquid storage tank is located above the cabinet body 110. The distance between the bottom of the liquid storage tank and the bottom of the accommodating space S1 of the cabinet body 110 is about 15 meters. The diameter of the pipeline 430 is about 3 inches or 4 inches. The flow rate at which the liquid injection device 40 injects liquid is about 70.19 L/s, and the flow rate can be higher if a larger diameter is used. In some embodiments, if liquid is injected into the accommodating space S1 of the cabinet body 110 at a flow rate of about 70.19 L/s, the battery system 20 can be flooded within an injection time of about 2.5 minutes. In some embodiments, the flow rate of injecting liquid may also be increased by arranging the liquid storage tank at different heights combined with a booster pump, to flood the battery system 20 after different injection times.

In some embodiments, the fire extinguishing system may further include a spray fire extinguishing device (for example, spray fire extinguishing devices 50, 50A, and 50B). In some embodiments, the spray fire extinguishing device is configured to spray atomized droplets to a battery system 20 of an energy storage cabinet corresponding to the spray fire extinguishing device. In some embodiments, the particle size of the atomized droplets is less than 0.1 cm. In some embodiments, a liquid source of the atomized droplets may include an aqueous solution, an electrolyte (for example, sodium sulfate (Na₂SO₄), sodium chloride (NaCl), sodium hydroxide (NaOH), or the like), or other liquid that can be used for fire extinguishing, or any combination thereof. In some embodiments, the spray fire extinguishing device is configured to be started in response to at least one fire signal. In some embodiments, the spray fire extinguishing device 50 is configured to spray atomized droplets to the battery system 20 of the energy storage cabinet 10. In some embodiments, the spray fire extinguishing device 50 is configured to be started in response to at least one fire signal of the energy storage cabinet 10. In some embodiments, the spray fire extinguishing device 50A is configured to spray atomized droplets to the battery system 20 of the energy storage cabinet 10A. In some embodiments, the spray fire extinguishing device 50A is configured to be started in response to at least one fire signal of the energy storage cabinet 10A. In some embodiments, the spray fire extinguishing device 50B is configured to spray atomized droplets to the battery system 20 of the energy storage cabinet 10B. In some embodiments, the spray fire extinguishing device 50B is configured to be started in response to at least one fire signal of the energy storage cabinet 10B. According to some embodiments of the present disclosure, spraying atomized droplets to the battery system 20 can lower the temperature of the battery packs 210 of the battery system 20, to further help to extinguish fire.

In some embodiments, the spray fire extinguishing device 50 includes a solenoid valve 510, an outlet 520, and a pipeline 530. In some embodiments, liquid provided by the liquid supply system 400 is supplied to the spray fire extinguishing device 50 through the pipeline 530. The solenoid valve 510 opens when the spray fire extinguishing device 50 receives a fire signal, so that the liquid provided from the liquid supply system 400 is sprayed as atomized droplets to the battery system 20 of the energy storage cabinet 10 through the outlet 520. In some embodiments, the outlet 520 may be located above the battery packs 210. In some embodiments, the pore size of the outlet 520 of the spray fire extinguishing device is less than the pore size of the outlet 420 of the liquid injection device. In some embodiments, the diameter of the pipeline 530 of the spray fire extinguishing device is less than the diameter of the pipeline 430 of the liquid injection device. In some embodiments, the spray fire extinguishing device 50 may include one or more solenoid valves 510, one or more outlets 520, and one or more pipelines 530.

In some embodiments, the spray fire extinguishing devices 50, 50A, and 50B respectively include solenoid valves 510, 510A, and 510B, and may be started respectively in response to fire signals of the respective energy storage cabinets 10, 10A, and 10B, to spray, through the corresponding outlets 520, liquid provided by the liquid supply system 400 as atomized droplets to the battery systems 20 of the corresponding energy storage cabinets 10, 10A, and 10B. In some embodiments, the pipelines 530 of the spray fire extinguishing devices 50, 50A, and 50B are all connected to the same liquid supply system 400. In some embodiments, the pipelines 530 of the spray fire extinguishing devices 50, 50A, and 50B may be connected to different liquid supply systems. For example, the pipelines 530 of the spray fire extinguishing devices 50 and 50A may be connected to a liquid storage tank, and the pipeline 530 of the spray fire extinguishing device 50B may be connected to a fire water supply system. In some embodiments, the liquid supply system 400 may include a water storage tank and a fire water supply system, and the pipelines 530 of the spray fire extinguishing devices 50, 50A, and 50B are all connected to the water storage tank. The water storage tank is further connected to the fire water supply system. The fire water supply system can supply water into the water storage tank continuously, to help the water storage tank to provide water to the spray fire extinguishing devices 50, 50A, and 50B continuously.

In some embodiments, the fire extinguishing system may further include a gas fire extinguishing device (not shown in the figure). In some embodiments, the gas fire extinguishing device is configured to inject fire extinguishing gas into the battery system 20. In some embodiments, the gas fire extinguishing device may be arranged inside the battery system 20. The gas fire extinguishing device may include a plurality of airtight containers filled with concentrated fire extinguishing gas or solidified fire extinguishing gas. An opening of each airtight container is sealed through colloid. The airtight containers are respectively arranged in the respective battery packs 210. When the temperature of the battery pack 210 rises to a predetermined temperature (for example, above about 80°C), the colloid on the airtight container in the battery pack 210 melts to expose the opening, and the fire extinguishing gas is released from the airtight container through the opening and injected into the battery pack 210 for fire extinguishing. In some other embodiments, the gas fire extinguishing device may include one or more gas delivery pipelines and one or more gas outlet control valves. Gas outlet control valves are arranged in correspondence with the battery packs 210 of the battery system 20. The gas outlet control valve is configured to open in response to at least one fire signal of a battery pack 210 corresponding to the gas outlet control valve. A fire extinguishing gas supply system can provide fire extinguishing gas through a gas supply pipeline to a corresponding gas outlet control valve, to inject the fire extinguishing gas into the battery pack 210 for fire extinguishing. According to some embodiments of the present disclosure, injecting fire extinguishing gas into the battery pack 210 can directly extinguish fire at the region where fire starts, which helps to extinguish fire at the initial stage of battery fire.

In some embodiments, the fire extinguishing system may further include a fire sensor (for example, fire sensors 60, 60A, and 60B). In some embodiments, the fire sensors 60, 60A, and 60B are configured to detect fire statuses of their respective energy storage cabinets 10, 10A, and 10B and generate at least one fire signal. In some embodiments, the fire sensors 60, 60A, and 60B may each include a smoke sensor, a temperature sensor, a combustible gas sensor, or any combination thereof. In some embodiments, the fire sensors 60, 60A, and 60B may each be arranged in the cabinet body 110 and located outside the battery packs 210 and the battery management system 230. According to some embodiments of the present disclosure, compared with sensors arranged inside the battery packs 210, the fire sensors 60, 60A, and 60B arranged outside the battery packs 210 and the battery management system 230 can operate independently and quickly detect smoke, gas, and/or a temperature status in the accommodating space S1. In addition, the fire sensors 60, 60A, and 60B arranged outside the battery packs 210 and the battery management system 230 can choose, according to requirements of a function of the energy storage cabinet and a scenario matching the function of the energy storage cabinet, a detection function matching the requirements of the energy storage cabinet, and can be replaced and maintained easily. Therefore, they have the advantages of high design flexibility and low rework/maintenance costs.

In some embodiments, the fire extinguishing system may further include a plurality of fire sensors located inside the battery packs 210. The fire sensors are respectively located in the battery packs 210. The fire sensors inside the battery pack 210 may each include a smoke sensor, a temperature sensor, a combustible gas sensor, or any combination thereof. In some embodiments, the gas outlet control valve of the gas fire extinguishing device is configured to open in response to at least one fire signal S100 generated by a fire sensor inside a battery pack 210 corresponding to the gas outlet control valve. The fire signal S100 include that the temperature of the battery pack 210 exceeds a threshold (for example, above about 80°C). In some other embodiments, the gas outlet control valve of the gas fire extinguishing device is configured to open in response to at least one fire signal S100 (for example, at least one fire signal generated by the fire sensor 60, fire sensor 60A, and/or fire sensor 60B) generated by a fire sensor outside a battery pack 210 corresponding to the gas outlet control valve.

In some embodiments, the fire sensor 60 is configured to detect a fire status of the energy storage cabinet 10 to generate a fire signal S101, and the spray fire extinguishing device 50 is configured to spray atomized droplets to the battery system 20 of the energy storage cabinet 10 in response to the fire signal S101. In some embodiments, the fire sensor 60 is configured to detect a fire status of the energy storage cabinet 10 to generate a fire signal S102, and the liquid injection device 40 is configured to inject liquid into the accommodating space S1 of the cabinet body 110 of the energy storage cabinet 10 in response to the fire signal S102 to flood the battery system 20 for fire extinguishing. In some embodiments, similar to the fire sensor 60, the fire sensor 60A is configured to detect a fire status of the energy storage cabinet 10A to generate fire signals S101 and S102. The spray fire extinguishing device 50A and the liquid injection device 40A are respectively configured to be started in response to the fire signals S101 and S102. The fire sensor 60B is configured to detect a fire status of the energy storage cabinet 10B to generate fire signals S101 and S102. The spray fire extinguishing device 50B and the liquid injection device 40B are respectively configured to be started in response to the fire signals S101 and S102.

In some embodiments, the fire extinguishing system may further include a liquid level sensor (for example, liquid level sensors 70, 70A, and 70B). In some embodiments, the liquid level sensor is configured to detect a liquid level inside the accommodating space S1. In some embodiments, the liquid injection device 40 is configured to inject, in response to a liquid level signal generated by the liquid level sensor 70, liquid to flood the battery packs 210 of the energy storage cabinet 10 without flooding the battery management system 230. In some embodiments, the liquid injection device 40A is configured to inject, in response to a liquid level signal generated by the liquid level sensor 70A, liquid to flood the battery packs 210 of the energy storage cabinet 10A without flooding the battery management system 230. In some embodiments, the liquid injection device 40B is configured to inject, in response to a liquid level signal generated by the liquid level sensor 70B, liquid to flood the battery packs 210 of the energy storage cabinet 10B without flooding the battery management system 230. In some embodiments, the liquid level sensors 70, 70A, and 70B may each be arranged in the cabinet body 110 and located outside the battery packs 210 and the battery management system 230. In some embodiments, the liquid level sensors 70, 70A and 70B may each include a liquid level gauge (for example, a water level gauge). In some embodiments, the liquid level sensors 70, 70A and 70B may each include a flow meter, and the liquid level can be calculated based on the size of the accommodating space S1 in cooperation with the flow meter. In some embodiments, the liquid level sensors 70, 70A, and 70B may each include an image sensor (for example, a CCD). A distance between the image sensor and a liquid surface is detected by the image sensor arranged in the cabinet body 110, and then, a liquid level is calculated. In some embodiments, the liquid level sensors 70, 70A, and 70B may each include a plurality of liquid level sensor meters. The plurality of liquid level sensor meters are respectively arranged at different liquid level height positions in a cabinet body 110 (for example, arranged on an inner wall of the cabinet body 110 or arranged on the outer sides of battery packs 210 at different heights) to detect real-time liquid levels.

In some embodiments, the control system 80 may be configured to start the gas fire extinguishing device of the energy storage cabinet 10 when receiving a fire signal S100 from the fire sensor 60 or a fire signal S100 in the battery pack 210. In some embodiments, the control system 80 is configured to further start the spray fire extinguishing device 50 of the energy storage cabinet 10 when receiving a fire signal S101 from the fire sensor 60 after starting the gas fire extinguishing device. In some embodiments, the control system 80 is configured to further start the liquid injection device 40 of the energy storage cabinet 10 when receiving a fire signal S102 from the fire sensor 60 after starting the spray fire extinguishing device 50.

In some embodiments, the control system 80 may be configured to start the gas fire extinguishing device of the energy storage cabinet 10A when receiving a fire signal S100 from the fire sensor 60A or a fire signal S100 in the battery pack 210. In some embodiments, the control system 80 is configured to further start the spray fire extinguishing device 50A of the energy storage cabinet 10A when receiving a fire signal S101 from the fire sensor 60A after starting the gas fire extinguishing device. In some embodiments, the control system 80 is configured to further start the liquid injection device 40A of the energy storage cabinet 10A when receiving a fire signal S102 from the fire sensor 60A after starting the spray fire extinguishing device 50A.

In some embodiments, the control system 80 may be configured to start the gas fire extinguishing device of the energy storage cabinet 10B when receiving a fire signal S100 from the fire sensor 60B or a fire signal S100 in the battery pack 210. In some embodiments, the control system 80 is configured to further start the spray fire extinguishing device 50B of the energy storage cabinet 10B when receiving a fire signal S101 from the fire sensor 60B after starting the gas fire extinguishing device. In some embodiments, the control system 80 is configured to further start the liquid injection device 40B of the energy storage cabinet 10B when receiving a fire signal S102 from the fire sensor 60B after starting the spray fire extinguishing device 50B.

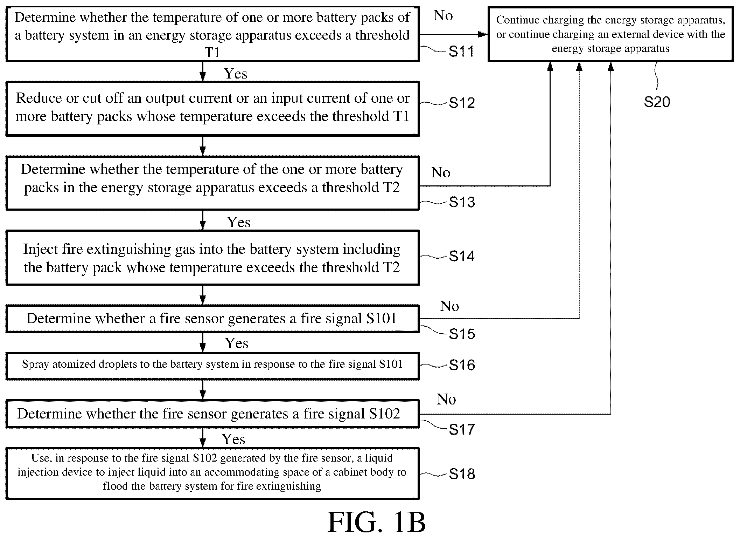

FIG. 1B is a flowchart of a fire extinguishing method of an energy storage apparatus according to some embodiments of the present disclosure. In some embodiments, the steps shown in FIG. 1B may be performed by, for example, the energy storage apparatus 1 shown in FIG. 1A or another suitable energy storage apparatus.

Step S11: Determine whether the temperature of one or more battery packs 210 of a battery system 20 in an energy storage apparatus exceeds a threshold T1. In some embodiments, in step S11, it is determined whether the temperature of one or more battery packs 210 in energy storage cabinets 10, 10A, and 10B exceeds the threshold T1. In some embodiments, in step S11, the temperature of the battery pack 210 may be detected by a fire sensor (for example, a temperature sensor) inside the battery pack 210. In some embodiments, the threshold T1 may be 50°C, 55°C, 60°C, 65°C, or another temperature ranging from 50°C to 65°C.

If it is determined that the temperature of one or more battery packs 210 in the energy storage apparatus exceeds the threshold T1, step S12 is performed. Step S12: Reduce or cut off an output current or an input current of one or more battery packs 210 whose temperature exceeds the threshold T1. In some embodiments, a battery management system 230 is configured to reduce or cut off, when the temperature of a battery pack 210 exceeds the threshold T1, an output current or an input current of the battery pack 210.

If it is determined that the temperature of none of the battery packs 210 in the energy storage apparatus exceeds the threshold T1, then it is determined that the energy storage apparatus is not at risk of fire, and step S20 is performed. Step S20 includes continuing charging the energy storage apparatus, or continuing charging an external device with the energy storage apparatus. In some embodiments, the energy storage apparatus may be continuously charged through a power supply device (for example, a power transmission network, a power generation device, or the like), or an external device (for example, an electric motor, an electric locomotive, a charging apparatus for a portable electronic product, or the like) may be continuously charged by the energy storage apparatus.

Step S13: Determine whether a fire sensor generates a fire signal S100. In some embodiments, in step S13, it is determined whether the temperature of the one or more battery packs 210 in the energy storage apparatus exceeds a threshold T2. In some embodiments, the threshold T2 may be 80°C, 90°C, 100°C, 200°C, or another temperature ranging from 80°C to 200°C. In some embodiments, in step S13, it is determined, through fire sensors (for example, temperature sensors inside the battery packs 210 or outside the battery packs 210), whether the temperature of the one or more battery packs 210 in the energy storage cabinets 10, 10A, and 10B exceeds the threshold T2. In some embodiments, step S13 is performed after step S12. In some embodiments, the threshold T2 is equal to or greater than the threshold T1. In some embodiments, after step S12 is performed, it is determined whether the temperature of the battery packs 210 is reduced to determine whether the energy storage apparatus is still at risk of fire through step S13.

If it is determined that the temperature of any one or more of the battery packs 210 in the energy storage apparatus exceeds the threshold T2, step S14 is performed. Step S14: Perform a gas fire extinguishing step. In some embodiments, the gas fire extinguishing step includes injecting fire extinguishing gas into the battery system 20 including the battery pack 210 whose temperature exceeds the threshold T2. In some embodiments, the gas fire extinguishing step includes injecting, in response to the fire signal S100 generated by the fire sensor, fire extinguishing gas into the battery system 20 of the battery pack 210 corresponding to the generated fire signal S100. If it is determined that the temperature of none of the battery packs 210 in the energy storage apparatus exceeds the threshold T2, or no fire signal S100 is generated, it is determined that the energy storage apparatus is not at risk of fire, then step S20 is performed.

Step S15: Determine whether the fire sensor generates a fire signal S101 in correspondence with one or more energy storage cabinets. In some embodiments, the fire signal S101 includes: in one or more accommodating spaces S1 in the energy storage cabinets 10, 10A, and 10B, whether the smoke concentration exceeds a threshold, whether the temperature exceeds the threshold (for example, about 300°C, 400°C, 500°C, 600°C, or another temperature ranging from 300°C to 600°C), whether the concentration of combustible gas exceeds a threshold (for example, 25% of the LFL of the combustible gas, such as the concentration of methane is greater than 0.714% or the concentration of propane is greater than 0.300%), or any combination thereof. In some embodiments, in step S15, it is determined whether the fire sensor 60, fire sensor 60A, and/or fire sensor 60B generates a fire signal S101 in correspondence with the energy storage cabinet 10, energy storage cabinet 10A, and/or energy storage cabinet 10B. In some embodiments, step S15 is performed after step S14. In some embodiments, after step S14 is performed, it is determined whether the fire sensor generates a fire signal S101 after the gas fire extinguishing step is performed to determine whether the energy storage apparatus is still at risk of fire through step S15.

If it is determined that the fire sensor generates a fire signal S101, step S16 is performed. In step S16, a spray fire extinguishing step is performed in response to the fire signal S101 generated by the fire sensor. In some embodiments, the spray fire extinguishing step includes spraying atomized droplets to the battery system 20 of the energy storage cabinet corresponding to the generated fire signal S101. If it is determined that the fire sensor does not generate a fire signal S101, it is determined that the energy storage apparatus is not at risk of fire, then step S20 is performed.

Step S17: Determine whether the fire sensor generates a fire signal S102 in correspondence with one or more energy storage cabinets. In some embodiments, the fire signal S102 includes: in one or more accommodating spaces S1 in the energy storage cabinets 10, 10A, and 10B, whether the smoke concentration exceeds a threshold, whether the temperature exceeds the threshold (for example, about 300°C, 400°C, 500°C, 600°C, or another temperature ranging from 300°C to 600°C), whether the concentration of combustible gas exceeds a threshold (for example, 25% of the LFL of the combustible gas, such as the concentration of methane is greater than 0.714% or the concentration of propane is greater than 0.300%), or any combination thereof. In some embodiments, in step S17, it is determined whether the fire sensor 60, fire sensor 60A, and/or fire sensor 60B generates a fire signal S102 in correspondence with the energy storage cabinet 10, energy storage cabinet 10A, and/or energy storage cabinet 10B. In some embodiments, step S17 is performed after step S16. In some embodiments, after step S16 is performed, it is determined whether the fire sensor generates a fire signal S102 after atomized droplets are sprayed for fire extinguishing, to determine whether the energy storage apparatus is still at risk of fire through step S17.

If it is determined that the fire sensor generates a fire signal S102, step S18 is performed. In step S18, a flooding step is performed in response to the fire signal S102 generated by the fire sensor. In some embodiments, the flooding step includes using a liquid injection device to inject liquid into the accommodating space S1 of the cabinet body 110 to flood the battery system 20 for fire extinguishing.

According to some embodiments of the present disclosure, the fire extinguishing method includes a plurality of level-by-level progressive steps, which may be stopped at any stage when cooling and fire extinguishing effects are achieved, and therefore, the method has the effects of highly efficient fire extinguishing and reducing costs or damages. Furthermore, according to some embodiments of the present disclosure, fire extinguishing is performed step by step through the plurality of level-by-level progressive steps, and each step helps to cool down the battery. Therefore, even if cooling and fire extinguishing are not achieved completely at a specific step, all the performed steps produce a superimposed cooling effect, so that the cooling down and fire extinguishing effects can be achieved in a more efficient way.

In addition, in the fire extinguishing method of pouring water jets onto the energy storage apparatus in an open space with a water supply from a fire water tank, a large amount of water directly flows through the outer periphery of the energy storage apparatus to the ground. As such, the cooling water cannot come into direct contact with the battery packs that generate a large amount of heat, resulting in a limited cooling effect. Compared with the above, according to some embodiments of the present disclosure, the last step of the fire extinguishing method is to flood the battery packs 210 of the battery system 20 in liquid, and the liquid used for flooding is covered by the cabinet body 110. Therefore, the liquid in the accommodating space S1 is provided with an effect similar to the liquid being sealed, and all the liquid in the accommodating space S1 can be efficiently used for cooling down the battery system 20. For example, the vaporization heat required for the liquid (for example, water) to be heated and evaporated can entirely come from the heat generated by the battery system 20. Therefore, good cooling and fire extinguishing effects can be achieved. Moreover, combustible gas or toxic gas produced by the battery in the battery system 20 due to fire is covered by the liquid in the accommodating space S1, so that the toxic gas can be isolated, and the concentration of the combustible gas can be reduced, thereby reducing the possibility of another disaster caused by fire in the battery system. Accordingly, the energy storage apparatus according to some embodiments of the present disclosure itself can successfully perform cooling and fire extinguishing through the foregoing fire extinguishing method, fire can be extinguished without having to wait for firefighters to arrive at the site to extinguish the fire. Therefore, the energy storage apparatus according to some embodiments of the present disclosure has high safety and can be applied to various scenarios requiring high safety, for example, can be used as a charging pile for an electric vehicle and arranged in a building or a home neighboring region.

In addition, according to some embodiments of the present disclosure, the liquid injection device 40 is configured to inject, in response to a liquid level signal generated by the liquid level sensor 70, liquid to flood the battery packs 210 of the energy storage cabinet 10 without flooding the battery management system 230. Therefore, the liquid can be prevented from flooding the battery management system 230 with a higher-voltage terminal and then causing electric touching, electric leakage, or even an electric shock.

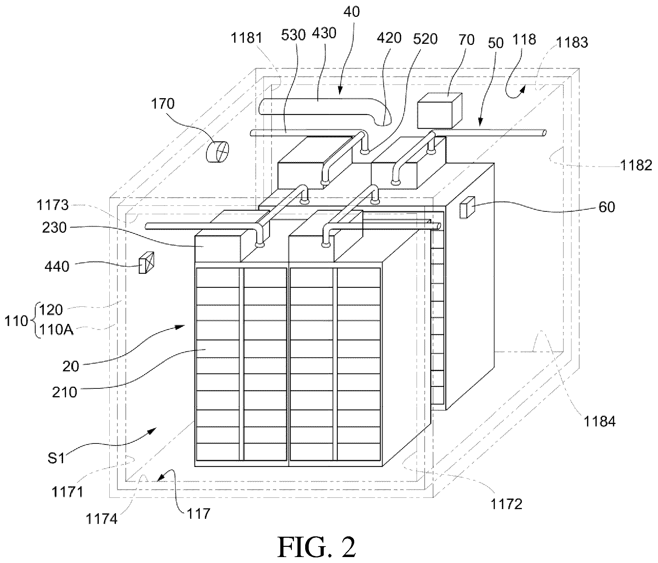

FIG. 2 is a perspective view of an energy storage apparatus according to some embodiments of the present disclosure.

Referring to FIG. 2, the energy storage cabinet 10 may include a cabinet body 110, a battery system 20, a liquid injection device 40, a spray fire extinguishing device 50, a gas fire extinguishing device (not shown in the figure), a fire sensor 60, a liquid level sensor 70, and a pressure relief valve 170. In some embodiments, the battery system 20 may include four battery packs 210 and four corresponding battery management systems 230, but the quantities of battery packs 210 and the battery management systems 230 are not limited thereto. In some embodiments, the cabinet body 110 includes an opening 117 and an opening 118 respectively corresponding to two battery packs 210. A door 130 may be pivotally connected to side edges of the opening 117 and the opening 118 of the cabinet body 110.

In some embodiments, the pressure relief valve 170 is configured to open when the pressure in an accommodating space S1 is greater than a threshold. The threshold is less than the compressive strength of the cabinet body 110. In some embodiments, liquid injected into the accommodating space S1 may evaporate due to the high temperature of the battery system 20, and when the pressure of vapor is too high, the vapor may be discharged through the pressure relief valve 170. In some embodiments, the pressure relief valve 170 may also be configured to open in response to a signal from a fire sensor, to exhaust smoke, combustible gas (for example, methane, propane, or the like), or toxic gas (for example, carbon monoxide).

In some embodiments, the cabinet body 110 may include an outlet control valve 440. In some embodiments, the outlet control valve 440 is configured to open and release the liquid in the accommodating space S1 out of the cabinet body 110. In some embodiments, the outlet control valve 440 is configured to control the flow rate of liquid injection to be greater than the flow rate of liquid discharge, so that the battery system 20 can be continuously in a state of being flooded in the liquid. In some embodiments, the control system 80 is configured to control the flow rate of liquid injection of the liquid injection device 40 and the flow rate of liquid discharge of the outlet control valve 440.

According to some embodiments of the present disclosure, through the design of the outlet control valve 440, the liquid flooding the battery packs 210 can be cooled, before evaporating, again by liquid flowing in. Therefore, the cooling effect of the liquid in the accommodating space S1 for the battery system 20 is improved, and the cooling and fire extinguishing effects of the energy storage apparatus are further improved.

In some embodiments, the cabinet body 110 includes a concrete body 110A and a flame retardant material layer 120. In some embodiments, the concrete body 110A is formed of an ultra-high performance concrete (UHPC), and the flame retardant material layer 120 is in direct contact with one or more inner surfaces of a plurality of walls of the concrete body 110A and is exposed to the accommodating space S1. In some embodiments, the walls of the concrete body 110A have a thickness of less than or equal to about 5 cm. In some embodiments, the walls of the concrete body 110A have a thickness of less than or equal to about 2.5 cm. In some embodiments, the size of the accommodating space S1 allows an operator to enter into the accommodating space S1, to maintain and/or operate functional components or apparatuses arranged in the accommodating space S1.

In some embodiments, the concrete body 110A may include synthetic fibers, steel fibers, a combination thereof, or the like. In some embodiments, the length of the synthetic fibers ranges from about 4 mm to about 20 mm, and the diameter of the synthetic fibers ranges from about 0.1 to 0.2 mm. In some embodiments, the synthetic fibers account for about 20 kg/m³ to about 60 kg/m³ of the concrete body 110A. In some embodiments, the length of the steel fibers ranges about 5 mm to about 15 millimeters, and the diameter of the steel fibers is about 0.2 mm. In some embodiments, the steel fibers account for about 120 kg/m³ to about 200 kg/m³ of the concrete body 110A. The synthetic fibers and/or steel fibers can enhance the flexural strength (or bending strength) of the concrete body 110. Since the concrete body 110A includes the foregoing synthetic fibers and/or steel fibers and is formed of UHPC, there is no need to arrange a reinforcement structure (for example, a reinforcement cage and/or a reinforcement assembly including a plurality of stirrups) in the walls of the concrete body 110A. The concrete body 110A itself can have a bending resistance similar to that of ordinary reinforced concrete, so that the concrete body 110A can have a smaller wall thickness as well. Therefore, the overall weight of the cabinet body 110 can be reduced, which is beneficial to carrying and moving of the cabinet body 110.

In some embodiments, the concrete main body 110 may include from about 400 kg/m³ to about 500 kg/m³ of one type of Type I, II, III, IV, or V Portland cement and from about 400 kg/m³ to about 500 kg/m³ of another type of Type I, II, III, IV, or V Portland cement. In some embodiments, the concrete body 110A may include silica fume at a content of about 120 kg/m³ to about 180 kg/m³. In some embodiments, the concrete body 110A may include silica sand at a content of about 900 kg/m³ to about 1000 kg/m³. In some embodiments, the concrete body 110A may include quartz powder at a content of about 30 kg/m³ to about 150 kg/m³. In some embodiments, due to the foregoing combination of silica fume and quartz powder, the concrete body 110A has higher compressive strength than that of ordinary concrete.

In some embodiments, the unit structure weight of the concrete body 110A is equal to or greater than about 2300 kg/m³. In some embodiments, the unit structure weight of the concrete body 110A ranges from about 2300 kg/m³ to about 2700 kg/m³. In some embodiments, the compressive strength of the concrete body 110A is equal to or greater than about 120 MPa. In some embodiments, the compressive strength of the concrete body 110A ranges from about 120 MPa to about 180 MPa. In some embodiments, the ultimate flexural strength of the concrete body 110A is greater than about 15 MPa. Accordingly, no reinforcement cage and/or reinforcement assembly including a plurality of stirrups for improving flexural strength needs to be arranged in the concrete body 110A, so that the concrete body 110A can have a smaller wall thickness, thereby reducing the overall weight of the cabinet body 110. Moreover, the concrete body 110A can provide high compressive strength and high flexural strength for the cabinet body 110, and therefore, can be applied in a more extreme environment (for example, an environment of withstanding high-temperature flames) while still maintaining the integrity of the overall structure.

In some embodiments, the thermal conductivity of the concrete body 110A is equal to or less than about 1.8 W/m·K. In some embodiments, the thermal conductivity of the concrete body 110A ranges from about 1.6 W/m·K to about 1.8 W/m·K. Compared with metal materials or common concrete (whose thermal conductivity is about 1.9 W/m·K to about 2.1 W/m-K), the concrete body 110A of the present disclosure has a better thermal insulation effect, which is conducive to slowing down the heat conduction between the interior of the accommodating space S1 and the outside of the concrete body 110A. When devices or components in the accommodating space S1 need to be maintained at a specific high or low temperature, the good thermal insulation effect of the concrete body 110A helps to reduce the energy required by an air conditioning apparatus, which can reduce costs and has the additional effects of environmental protection, energy saving, and carbon reduction.

In some embodiments, the flame retardant material layer 120 includes ceramic fiber boards, ceramic fiber blankets, refractory mortar, thermal insulation refractory bricks, lightweight aggregate refractory materials, thermal insulation materials, or any combination thereof. In some embodiments, the flame retardant material layer 120 has a thickness of less than or equal to about 5 cm. In some embodiments, the flame retardant material layer 120 has a thickness of less than or equal to about 2.5 cm. In some embodiments, mixed concrete slurry may be poured into a mold with a predetermined shape, the flame retardant material layer 120 may be attached to a semi-finished product of the concrete slurry before the concrete slurry is hardened, and then cured. In this way, the hardened concrete can be firmly combined with the flame retardant material layer 120, so that a bonding interface between the concrete body 110A and the flame retardant material layer 120 has high bonding strength. Therefore, the flame retardant material layer 120 will not fall off due to high heat.

In some embodiments, the cabinet body 110 is configured to withstand flames at a temperature equal to or higher than at least about 150°C. In some embodiments, the cabinet body 110 is configured to withstand flames at a temperature of about 150°C or higher, 200°C, 300°C, 400°C, 500°C, 600°C, 700°C, 800°C, 900°C, 1000°C, 1100°C, or 1200°C, or another temperature ranging from 150°C to 1200°C. In some embodiments, the cabinet body 110 is configured to have a compressive strength greater than at least about 60 MPa. In some embodiments, the cabinet body 110 is configured to have a compressive strength of about 60 MPa or higher, 70 MPa, 80 MPa, 90 MPa, 100 MPa, 110 MPa, 120 MPa, 130 MPa, 140 MPa, 150 MPa, 160 MPa, 170 MPa, or 180 MPa, or another compressive strength ranging from 60 MPa to 180 MPa. In some embodiments, the cabinet body 110 is configured to withstand flames at a temperature equal to or higher than about 600°C and have a compressive strength greater than about 120 MPa. In some embodiments, the cabinet body 110 is configured to withstand flames at a temperature equal to or higher than about 900°C. In some embodiments, the cabinet body 110 is configured to withstand flames at a temperature equal to or higher than a range of about 900°C to about 1200°C. In some embodiments, the concrete body 110A and the flame retardant material layer 120 are configured as a whole to withstand flames at a temperature equal to or higher than about 900°C. In some embodiments, the concrete body 110A and the flame retardant material layer 120 are configured as a whole to withstand flames at a temperature equal to or higher than a range of about 900°C to about 1200°C.

In some other embodiments, the cabinet body 110 may also include steel structure materials, such as metal thick boards. In some embodiments, the cabinet body 110 including steel structure materials is configured to withstand flames at a temperature equal to or higher than about 150°C (for example, a temperature of about 150°C or higher, 200°C, 300°C, 400°C, 500°C, 600°C, 700°C, 800°C, 900°C, 1000°C, 1100°C, or 1200°C, or another temperature ranging from 150°C to 1200°C) and have a compressive strength greater than at least about 60 MPa (for example, a compressive strength of about 60 MPa or higher, 70 MPa, 80 MPa, 90 MPa, 100 MPa, 110 MPa, 120 MPa, 130 MPa, 140 MPa, 150 MPa, 160 MPa, 170 MPa, or 180 MPa, or another compressive strength ranging from 60 MPa to 180 MPa)

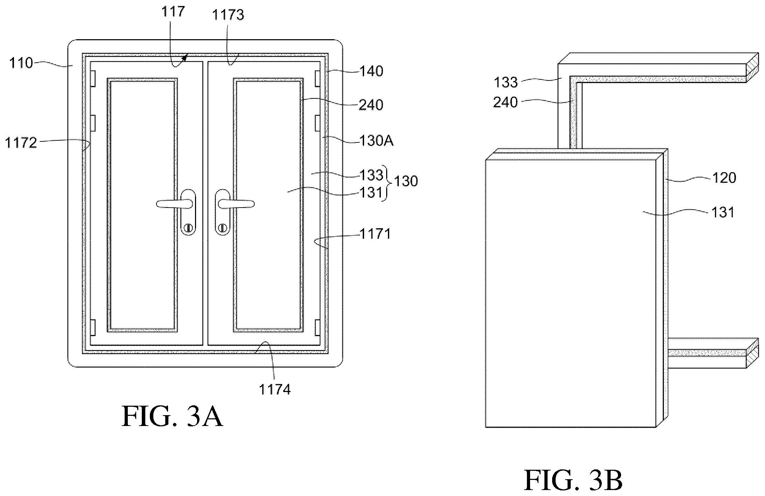

FIG. 3A is a partial schematic diagram of a cabinet body 110 of an energy storage apparatus according to some embodiments of the present disclosure.

Referring to FIG. 2 and FIG. 3A, the energy storage cabinet 10 further includes a door 130 and buffer members 140 and 240. In some embodiments, the door 130 may be pivotally connected to a side edge of an opening 117 of the cabinet body 110. In some embodiments, the door 130 may be pivotally connected to side edges 1171 and 1172 of the opening 117 of the cabinet body 110 through a door frame 130A. In some embodiments, the door 130 includes two door plates. The two door plates open in opposite directions and are respectively pivotally connected to the side edges 1171 and 1172 of the opening 117 of the cabinet body 110. In some embodiments, the buffer member 140 is used to seal gaps between the door 130 and the side edges (for example, side edges 1171, 1172, 1173, and 1174) of the opening 117 of the cabinet body 110. In some embodiments, referring to FIG. 2, the energy storage cabinet 10 may further include another door 130. The door 130 may be pivotally connected to side edges 1181 and 1182 of the opening 118 of the cabinet body 110 through the door frame 130A. In some embodiments, the door frame 130A is arranged on the cabinet body 110, and the buffer member 140 is configured to seal gaps between the door 130 and the side edges (for example, side edges 1171, 1172, 1173, and 1174) of the opening 117 of the cabinet body 110. In some embodiments, referring to FIG. 2, the buffer member 140 is configured to seal gaps between the door frame 130A and the side edges (for example, side edges 1181, 1182, 1183, and 1184) of the opening 118 of the cabinet body 110.

In some embodiments, the door 130 includes a concrete layer 131 and a door plate frame 133, and the concrete layer 131 is mounted in the door plate frame 133. In some embodiments, the buffer member 240 is configured to seal gaps between the concrete layer 131 and the door plate frame 133.

In some embodiments, the buffer member 140 is configured to deform or rupture when the pressure in the accommodating space S1 is greater than a threshold, to generate a pressure relief buffer mechanism. In addition, the threshold is less than the compressive strength of the cabinet body 110. In some embodiments, the buffer member 240 is configured to deform or rupture when the pressure in the accommodating space S1 is greater than a threshold, to generate a pressure relief buffer mechanism. In addition, the threshold is less than the compressive strength of the cabinet body 110. In some embodiments, the liquid injection device 40 injects liquid into the accommodating space S1 of the cabinet body 110 at a first flow rate, and the liquid in the accommodating space S1 overflows out of the cabinet body 110 through the pressure relief buffer mechanism at a second flow rate. The first flow rate is greater than the second flow rate. In some embodiments, the buffer members 140 and 240 include silicon carbide.

According to some embodiments of the present disclosure, through the design of the buffer members 140 and 240, part of the liquid can flow out of the cabinet body 110, and the flow rate of liquid injection is maintained greater than the flow rate of liquid discharge. Therefore, the battery system 20 may be continuously in a state of being flooded in the liquid. In addition, no additional pressure sensor or control system is needed to control liquid discharge, which has the effects of simple operation and low costs. Furthermore, through the design of the buffer members 140 and 240, the liquid flooding the battery packs 210 can be cooled, before evaporating, again by liquid flowing in, so that the cooling effect of the liquid in the accommodating space S1 for the battery system 20 is improved, and, the cooling and fire extinguishing effects of the energy storage apparatus are further improved.

FIG. 3B is a partial exploded view of a door 130 of a cabinet body 110 of an energy storage apparatus according to some embodiments of the present disclosure.

In some embodiments, the door 130 includes a concrete layer 131 and a flame retardant material layer 120 arranged on the concrete layer 131. In some embodiments, the concrete layer 131 and the flame retardant material layer 120 constitutes a door plate as a whole. The buffer member 240 is configured to seal gaps between the door plate and a door plate frame 133.

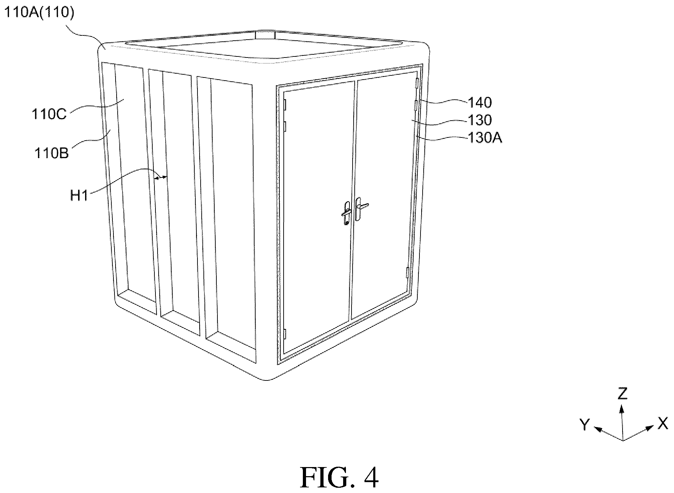

FIG. 4 is a three-dimensional view of a cabinet body 110 of an energy storage apparatus according to some embodiments of the present disclosure.

In some embodiments, the concrete body 110A of the cabinet body 110 further includes a plurality of ribs 110B. The ribs 110B protrude from a wall 110C of the concrete body 110A. In some embodiments, the protrusion height H1 of the ribs 110B is greater than the thickness of the wall 110C. In some embodiments, the protrusion height H1 of the ribs 110B is about 2 to 5 times the thickness of the wall 110C. In some embodiments, the wall 110C of the concrete body 110A has a thickness less than or equal to about 2.5 cm, and the protrusion height H1 of the ribs 110B ranges from about 10 to 13 cm.

In some embodiments, the concrete body 110A is integrally formed. In some embodiments, the integrally formed concrete body 110A can be produced by pouring mixed concrete slurry into a mold with a predetermined shape, followed by curing and demolding.

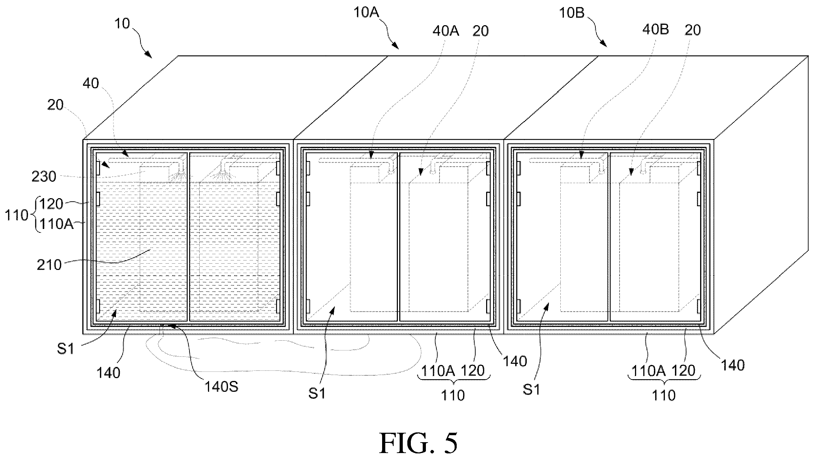

FIG. 5 is a schematic diagram of an energy storage apparatus 1 according to some embodiments of the present disclosure.

In some embodiments, the energy storage apparatus 1 includes a plurality of energy storage cabinets 10, 10A, and 10B, and the fire extinguishing system further includes a plurality of liquid injection devices 40, 40A, and 40B. In some embodiments, more than two energy storage cabinets in the plurality of energy storage cabinets can be all arranged close to each other, for example, be arranged close to each other two by two, or a plurality of energy storage cabinets may form a group and be arranged close to each other. The plurality of energy storage cabinets arranged close to each other can form a container-like multi-unit combined energy storage apparatus. In some other embodiments, the plurality of energy storage cabinets 10, 10A, and 10B may be arranged apart from each other. As shown in FIG. 5, in some embodiments, when the energy storage cabinet 10 catches fire, after the flooding step is performed on the energy storage cabinet 10, liquid overflowing from the energy storage cabinet 10 through the pressure relief buffer mechanism 140S of the buffer member 140 can be isolated from the battery system 20 of the energy storage cabinet 10A by the cabinet body 110 of the energy storage cabinet 10A. In addition, in some embodiments, since the cabinet body 110 is configured to withstand flames at a high temperature (for example, flames at a temperature equal to or higher than about 600°C) and have high compressive strength (for example, compressive strength greater than about 120 MPa), even if a neighboring energy storage cabinet catches fire and generates high heat or liquid that overflows outside due to execution of a flooding step, an energy storage cabinet that does not catch fire (for example, the energy storage cabinets 10A and 10B) can still maintain good operation without being affected.

As used herein, the terms "approximately", "substantially", "basically" and "about" are used to describe and allow for minor variations. When used in conjunction with an event or circumstance, the term can refer to instances in which the event or circumstance precisely occurs as well as instances in which the event or circumstance occurs to a close approximation. For example, when used in connection with a numerical value, the terms may mean a variation range of less than or equal to ±10% of the numerical value, such as less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%. For example, if the difference between two values is less than or equal to ±10% of the mean value of the values, such as less than or equal to ±5%, less than or equal to ±4%, less than or equal to ±3%, less than or equal to ± 2%, less than or equal to ±1%, less than or equal to ±0.5%, less than or equal to ±0.1%, or less than or equal to ±0.05%, the two values can be considered "substantially" or "approximately" the same. For example, "substantially" parallel may refer to an angular variation range of less than or equal to ±10° relative to 0°, such as less than or equal to ±5°, less than or equal to ±4°, less than or equal to ±3°, less than or equal to ±2°, less than or equal to ±1°, less than or equal to ±0.5°, less than or equal to ±0.1°, or less than or equal to ±0.05°. For example, "substantially" perpendicular may refer to an angular variation range of less than or equal to ±10° relative to 90°, such as less than or equal to ±5°, less than or equal to ±4°, less than or equal to ±3°, less than or equal to ±2°, less than or equal to ±1°, less than or equal to ±0.5°, less than or equal to ±0.1°, or less than or equal to ±0.05°.

Two surfaces may be considered coplanar or substantially coplanar if the displacement between the two surfaces is not greater than 5 µm, not greater than 2 µm, not greater than 1 µm, or not greater than 0.5 µm.

As used herein, the terms "conductive", "electrically conductive", and "electrical conductivity" refer to the ability to transport an electric current. Conductive materials generally refer to materials that exhibit little or zero resistance to the flow of an electrical current. One measure of the electrical conductivity is Siemens per meter (S/m). Generally, the electrically conductive material is a material with electrical conductivity greater than about 10⁴ S/m (such as at least 10⁵ S/m or at least 10⁶ S/m). The electrical conductivity of a material can sometimes vary with temperature. Unless otherwise specified, the electrical conductivity of a material is measured at room temperature.

## Claims

1. An energy storage apparatus (1), comprising:
an energy storage cabinet (10) having an accommodating space (S1) for accommodating at least one battery system (20);
**characterized by**
a pressure relief buffer mechanism (140S) comprising a sealing buffer member (140, 240) configured to deform or rupture when a pressure in the accommodating space is greater than a threshold, such that a gas or a liquid in the accommodating space is discharged out of the energy storage cabinet through the deformed or ruptured sealing buffer member, wherein
the energy storage cabinet comprises a cabinet body (110) and a door (130) pivotally connected to a side edge (1171, 1172, 1173, 1174) of an opening (117) of the cabinet body, and the sealing buffer member (140) is configured to seal a gap between the door (130) and the side edge of the opening of the cabinet body.

2. The energy storage apparatus according to claim 1, wherein the energy storage cabinet (10) is configured to have a compressive strength ranging from 60 MPa to 180 MPa, and the threshold is less than the compressive strength of the energy storage cabinet.

3. The energy storage apparatus according to any of the preceding claims, wherein the pressure relief buffer mechanism (140S) is free of a pressure sensor and a control system.

4. The energy storage apparatus according to any of the preceding claims, wherein the sealing buffer member (140, 240) comprises silicon carbide.

5. The energy storage apparatus according to any of the preceding claims, wherein the energy storage cabinet further comprises a door frame (130A), the door is pivotally connected to the side edge of the opening of the cabinet body through the door frame, and the sealing buffer member (140) is configured to seal a gap between the door frame (130A) and the side edge (1171, 1172, 1173, 1174) of the opening of the cabinet body.

6. The energy storage apparatus according to any of the preceding claims, wherein the door comprises a concrete layer (131) and a door plate frame (133), and the sealing buffer member (240) is configured to seal a gap between the concrete layer and the door plate frame.

7. The energy storage apparatus according to any of the preceding claims, wherein the door comprises a door plate (131, 120) and a door plate frame (133), the door plate comprises a concrete layer (131) and a flame retardant material layer (120) disposed on the concrete layer, and the sealing buffer member is configured to seal a gap between the door plate and the door plate frame.

8. The energy storage apparatus according to any of the preceding claims, further comprising a fire extinguishing system which comprises a liquid injection device (40, 40A, 40B), and the liquid injection device is configured to inject the liquid into the accommodating space (S1) of the energy storage cabinet to flood the at least one battery system (20) for fire extinguishing.

9. The energy storage apparatus according to claim 8, wherein the liquid injection device is configured to inject the liquid into the accommodating space of the energy storage cabinet at a first flow rate, and the liquid in the accommodating space is configured to overflow out of the energy storage cabinet through the pressure relief buffer mechanism (140S) at a second flow rate lower than the first flow rate.

10. The energy storage apparatus according to any of the preceding claims, wherein the pressure relief buffer mechanism comprises a pressure relief valve (170, 170A, 170B), and the pressure relief valve is configured to be opened when the pressure in the accommodating space is greater than the threshold, such that the gas in the accommodating space is discharged out of the energy storage cabinet through the pressure relief valve.

11. A pressure relief method of an energy storage apparatus (1), comprising:
providing an energy storage apparatus (1) comprising an energy storage cabinet (10) and a pressure relief buffer mechanism (140S), wherein the energy storage cabinet has an accommodating space (S1) for accommodating at least one battery system (20); and
discharging a gas or a liquid in the accommodating space out of the energy storage cabinet through the pressure relief buffer mechanism when a pressure in the accommodating space is greater than a threshold; wherein
the energy storage cabinet comprises a cabinet body (110) and a door (130) pivotally connected to a side edge (1171, 1172, 1173, 1174) of an opening (117) of the cabinet body, and a sealing buffer member (140) is configured to seal a gap between the door (130) and the side edge of the opening of the cabinet body, and
the pressure relief buffer mechanism comprises the sealing buffer member (140, 240) configured to deform or rupture when the pressure in the accommodating space is greater than the threshold, such that the gas or the liquid in the accommodating space is discharged out of the energy storage cabinet through the deformed or ruptured sealing buffer member.

12. The pressure relief method according to claim 11, wherein the energy storage cabinet further comprises a liquid injection device (40, 40A, 40B), and the method further comprises:
in response to a fire signal, injecting the liquid into the accommodating space of the energy storage cabinet through the liquid injection device to flood the at least one battery system for fire extinguishing.

13. The pressure relief method according to claim 11 or 12, wherein the pressure relief buffer mechanism comprises a pressure relief valve (170, 170A, 170B), and the pressure relief valve is configured to be opened in response to a fire signal, such that the gas in the accommodating space is discharged out of the energy storage cabinet through the pressure relief valve

## Patentansprüche

1. Energiespeichervorrichtung (1), umfassend:
einen Energiespeicher-Schrank (10) mit einem Aufnahmeraum (S1) zur Aufnahme mindestens eines Batteriesystems (20);
**gekennzeichnet durch**
einen Druckentlastungs-Ausgleichsmechanismus (140S), der ein Dichtungs-Ausgleichselement (140, 240) aufweist, das so ausgebildet ist, dass es sich verformt oder bricht, wenn ein Druck in dem Aufnahmeraum größer als ein Schwellenwert ist, so dass ein Gas oder eine Flüssigkeit in dem Aufnahmeraum über das verformte oder gebrochene Dichtungs-Ausgleichselement aus dem Energiespeicher-Schrank abgelassen wird, wobei
der Energiespeicher-Schrank einen Schrankkörper (110) und eine Tür (130) aufweist, die schwenkbar mit einer Seitenkante (1171, 1172, 1173, 1174) einer Öffnung (117) des Schrankkörpers schwenkbar verbunden ist, und das Dichtungs-Ausgleichselement (140) so ausgebildet ist, dass es einen Spalt zwischen der Tür (130) und der Seitenkante der Öffnung des Schrankkörpers abdichtet.

2. Energiespeichervorrichtung nach Anspruch 1, wobei der Energiespeicher-Schrank (10) so ausgelegt ist, dass er eine Druckfestigkeit im Bereich von 60 MPa bis 180 MPa aufweist, und der Schwellenwert kleiner ist als die Druckfestigkeit des Energiespeicher-Schranks.

3. Energiespeichervorrichtung nach einem der vorstehenden Ansprüche, wobei der Druckentlastungs-Ausgleichsmechanismus (140S) frei von einem Drucksensor und einem Steuerungssystem ist.

4. Energiespeichervorrichtung nach einem der vorstehenden Ansprüche, wobei das Dichtungs-Ausgleichselement (140, 240) Siliziumkarbid umfasst.

5. Energiespeichervorrichtung nach einem der vorstehenden Ansprüche, wobei der Energiespeicher-Schrank ferner einen Türrahmen (130A) umfasst, die Tür über den Türrahmen schwenkbar mit der Seitenkante der Öffnung des Schrankkörpers verbunden ist und das Dichtungs-Ausgleichselement (140) so ausgebildet ist, dass es einen Spalt zwischen dem Türrahmen (130A) und der Seitenkante (1171, 1172, 1173, 1174) der Öffnung des Schrankkörpers abdichtet.

6. Energiespeichervorrichtung nach einem der vorstehenden Ansprüche, wobei die Tür eine Betonschicht (131) und einen Türplattenrahmen (133) umfasst und das Dichtungs-Ausgleichselement (240) so ausgebildet ist, dass es einen Spalt zwischen der Betonschicht und dem Türplattenrahmen abdichtet.

7. Energiespeichervorrichtung nach einem der vorstehenden Ansprüche, wobei die Tür eine Türplatte (131, 120) und einen Türplattenrahmen (133) umfasst, die Türplatte eine Betonschicht (131) und eine auf der Betonschicht angeordnete Schicht aus flammhemmendem Material (120) umfasst und das Dichtungs-Ausgleichselement so ausgebildet ist, dass es einen Spalt zwischen der Türplatte und dem Türplattenrahmen abdichtet.

8. Energiespeichervorrichtung nach einem der vorstehenden Ansprüche, die ferner ein Feuerlöschsystem umfasst, das eine Flüssigkeitseinspritzvorrichtung (40, 40A, 40B) umfasst, wobei die Flüssigkeitseinspritzvorrichtung so konfiguriert ist, dass sie die Flüssigkeit in den Aufnahmeraum (S1) des Energiespeicher-Schranks einspritzt, um das mindestens eine Batteriesystem (20) zur Brandbekämpfung zu fluten.

9. Energiespeichervorrichtung nach Anspruch 8, wobei die Flüssigkeitseinspritzvorrichtung so ausgelegt ist, dass sie die Flüssigkeit mit einer ersten Durchflussrate in den Aufnahmeraum des Energiespeicher-Schranks einspritzt, und die Flüssigkeit in dem Aufnahmeraum so ausgelegt ist, dass sie mit einer zweiten Durchflussrate, die niedriger ist als die erste Durchflussrate, über den Druckentlastungs-Ausgleichsmechanismus (140S) aus dem Energiespeicher-Schrank überläuft bzw. herausläuft.

10. Energiespeichervorrichtung nach einem der vorstehenden Ansprüche, wobei der Druckentlastungs-Ausgleichsmechanismus ein Druckentlastungsventil (170, 170A, 170B) umfasst und das Druckentlastungsventil so konfiguriert ist, dass es geöffnet ist, wenn der Druck in dem Aufnahmeraum größer als der Schwellenwert ist, so dass das Gas in dem Aufnahmeraum über das Druckentlastungsventil aus dem Energiespeicher-Schrank abgelassen wird.

11. Verfahren zur Druckentlastung einer Energiespeichervorrichtung (1), umfassend:
Bereitstellen einer Energiespeichervorrichtung (1), die einen Energiespeicher-Schrank (10) und einen Druckentlastungs-Ausgleichsmechanismus (140S) umfasst, wobei der Energiespeicher-Schrank einen Aufnahmeraum (S1) zur Aufnahme mindestens eines Batteriesystems (20) aufweist; und
Ableiten eines Gases oder einer Flüssigkeit in dem Aufnahmeraum aus dem Energiespeicher-Schrank über den Druckentlastungs-Ausgleichsmechanismus, wenn ein Druck in dem Aufnahmeraum größer als ein Schwellenwert ist; wobei
der Energiespeicher-Schrank einen Schrankkörper (110) und eine Tür (130) umfasst, die schwenkbar mit einer Seitenkante (1171, 1172, 1173, 1174) einer Öffnung (117) des Schrankkörpers schwenkbar verbunden ist, und ein Dichtungs-Ausgleichselement (140) so ausgebildet ist, dass es einen Spalt zwischen der Tür (130) und der Seitenkante der Öffnung des Schrankkörpers abdichtet, und
der Druckentlastungs-Ausgleichsmechanismus das Dichtungs-Ausgleichselement (140, 240) umfasst, das so ausgebildet ist, dass es sich verformt oder bricht, wenn der Druck in dem Aufnahmeraum größer als der Schwellenwert ist, so dass das Gas oder die Flüssigkeit in dem Aufnahmeraum über das verformte oder gebrochene Dichtungs-Ausgleichselement aus dem Energiespeicher-Schrank abgelassen wird.

12. Verfahren zur Druckentlastung nach Anspruch 11, wobei der Energiespeicher-Schrank ferner eine Flüssigkeitseinspritzvorrichtung (40, 40A, 40B) umfasst, und das Verfahren ferner umfasst:
in Antwort auf ein Brandsignal das Einspritzen der Flüssigkeit in den Aufnahmeraum des Energiespeicher-Schranks durch die Flüssigkeitseinspritzvorrichtung, um das mindestens eine Batteriesystem zur Brandbekämpfung zu fluten.

13. Verfahren zur Druckentlastung nach Anspruch 11 oder 12, wobei der Druckentlastungs-Ausgleichsmechanismus ein Druckentlastungsventil (170, 170A, 170B) umfasst und das Druckentlastungsventil so konfiguriert ist, dass es in Antwort auf ein Brandsignal geöffnet wird, sodass das Gas in dem Aufnahmeraum über das Druckentlastungsventil aus dem Energiespeicher-Schrank abgelassen wird

## Revendications

1. Un appareil de stockage d'énergie (1), comprenant :
une armoire de stockage d'énergie (10) comportant un espace de logement (S1) destiné à loger au moins un système de batterie (20) ;
**caractérisé par**
un mécanisme tampon de décompression (140S) comprenant un élément tampon d'étanchéité (140, 240) configuré pour se déformer ou se rompre lorsqu'une pression dans l'espace de logement est supérieure à un seuil, de telle sorte qu'un gaz ou un liquide présent dans l'espace de logement soit évacué hors de l'armoire de stockage d'énergie à travers l'élément tampon d'étanchéité déformé ou rompu, dans lequel
l'armoire de stockage d'énergie comprend un corps d'armoire (110) et une porte (130) reliée de manière pivotante à un bord latéral (1171, 1172, 1173, 1174) d'une ouverture (117) du corps d'armoire, et l'élément tampon d'étanchéité (140) est configuré pour colmater un interstice entre la porte (130) et le bord latéral de l'ouverture du corps d'armoire.

2. L'appareil de stockage d'énergie selon la revendication 1, dans lequel l'armoire de stockage d'énergie (10) est configurée pour présenter une résistance à la compression comprise entre 60 MPa et 180 MPa, et le seuil est inférieur à la résistance à la compression de l'armoire de stockage d'énergie.

3. L'appareil de stockage d'énergie selon l'une quelconque des revendications précédentes, dans lequel le mécanisme tampon de décompression (140S) est dépourvu de capteur de pression et de système de commande.

4. L'appareil de stockage d'énergie selon l'une quelconque des revendications précédentes, dans lequel l'élément tampon d'étanchéité (140, 240) comprend du carbure de silicium.

5. L'appareil de stockage d'énergie selon l'une quelconque des revendications précédentes, dans lequel l'armoire de stockage d'énergie comprend en outre un cadre de porte (130A), la porte est reliée de manière pivotante au bord latéral de l'ouverture du corps d'armoire par l'intermédiaire du cadre de porte, et l'élément tampon d'étanchéité (140) est configuré pour colmater un interstice entre le cadre de porte (130A) et le bord latéral (1171, 1172, 1173, 1174) de l'ouverture du corps de l'armoire.

6. L'appareil de stockage d'énergie selon l'une quelconque des revendications précédentes, dans lequel la porte comprend une couche de béton (131) et un cadre de panneau de porte (133), et l'élément tampon d'étanchéité (240) est configuré pour colmater un espace entre la couche de béton et le cadre de panneau de porte.

7. L'appareil de stockage d'énergie selon l'une quelconque des revendications précédentes, dans lequel la porte comprend une plaque de porte (131, 120) et un cadre de plaque de porte (133), la plaque de porte comprend une couche de béton (131) et une couche de matériau ignifuge (120) disposée sur la couche de béton, et l'élément tampon d'étanchéité est configuré pour colmater un espace entre la plaque de porte et le cadre de plaque de porte.

8. L'appareil de stockage d'énergie selon l'une quelconque des revendications précédentes, comprenant en outre un système d'extinction d'incendie qui comprend un dispositif d'injection de liquide (40, 40A, 40B), et le dispositif d'injection de liquide est configuré pour injecter le liquide dans l'espace de logement (S1) de l'armoire de stockage d'énergie afin d'inonder le au moins un système de batterie (20) pour l'extinction d'incendie.

9. L'appareil de stockage d'énergie selon la revendication 8, dans lequel le dispositif d'injection de liquide est configuré pour injecter le liquide dans l'espace de logement de l'armoire de stockage d'énergie à un premier débit, et le liquide présent dans l'espace de logement est configuré pour déborder hors de l'armoire de stockage d'énergie à travers le mécanisme tampon de décompression (140S) à un deuxième débit inférieur au premier débit.

10. L'appareil de stockage d'énergie selon l'une quelconque des revendications précédentes, dans lequel le mécanisme tampon de décompression comprend une soupape de décompression (170, 170A, 170B), et la soupape de décompression est configurée pour s'ouvrir lorsque la pression dans l'espace de logement est supérieure au seuil, de sorte que le gaz présent dans l'espace de logement est évacué hors de l'armoire de stockage d'énergie par la soupape de décompression.

11. Un procédé de décompression d'un appareil de stockage d'énergie (1), comprenant :
la fourniture d'un appareil de stockage d'énergie (1) comprenant une armoire de stockage d'énergie (10) et un mécanisme tampon de décompression (140S), dans lequel l'armoire de stockage d'énergie comporte un espace de logement (S1) destiné à loger au moins un système de batterie (20) ; et
l'évacuation d'un gaz ou d'un liquide présent dans l'espace de logement hors de l'armoire de stockage d'énergie par l'intermédiaire du mécanisme tampon de décompression lorsqu'une pression dans l'espace de logement est supérieure à un seuil ; dans lequel
l'armoire de stockage d'énergie comprend un corps d'armoire (110) et une porte (130) reliée de manière pivotante à un bord latéral (1171, 1172, 1173, 1174) d'une ouverture (117) du corps d'armoire, et un élément tampon d'étanchéité (140) est configuré pour colmater un interstice entre la porte (130) et le bord latéral de l'ouverture du corps d'armoire, et
le mécanisme tampon de décompression comprend l'élément tampon d'étanchéité (140, 240) configuré pour se déformer ou se rompre lorsque la pression dans l'espace de logement est supérieure au seuil, de telle sorte que le gaz ou le liquide présent dans l'espace de logement soit évacué hors de l'armoire de stockage d'énergie à travers l'élément tampon d'étanchéité déformé ou rompu.

12. Le procédé de décompression selon la revendication 11, dans lequel l'armoire de stockage d'énergie comprend en outre un dispositif d'injection de liquide (40, 40A, 40B), et le procédé comprend en outre :
en réponse à un signal d'incendie, l'injection du liquide dans l'espace de logement de l'armoire de stockage d'énergie par l'intermédiaire du dispositif d'injection de liquide afin d'inonder le au moins un système de batterie pour l'extinction de l'incendie.

13. Le procédé de décompression selon la revendication 11 ou 12, dans lequel le mécanisme tampon de décompression comprend une soupape de décompression (170, 170A, 170B), et la soupape de décompression est configurée pour s'ouvrir en réponse à un signal d'incendie, de telle sorte que le gaz présent dans l'espace de logement soit évacué hors de l'armoire de stockage d'énergie par l'intermédiaire de la soupape de décompression.
